# EUROPEAN PATENT SPECIFICATION

(11) **EP 4 607 494 B1**
(45) Date of publication and mention of the grant of the patent: **23.09.2026**
(21) Application number: 25159067.5
(22) Date of filing: 20.02.2025
(51) Int. Cl.: G09B 9/02, G09B 9/04, G09B 9/05, G09B 9/12

(54) **IMPROVED CONTROL METHOD FOR CONTROLLING A DRIVING SIMULATOR FOR SIMULATING THE DRIVING OF A VEHICLE**
VERBESSERTES STEUERUNGSVERFAHREN ZUR STEUERUNG EINES FAHRSIMULATORS ZUR SIMULATION DES FAHRENS EINES FAHRZEUGS
PROCÉDÉ DE COMMANDE AMÉLIORÉ POUR COMMANDER UN SIMULATEUR DE CONDUITE POUR SIMULER LA CONDUITE D'UN VÉHICULE

(30) Priority: 26.02.2024 IT 202400004018
(43) Date of publication of application: 27.08.2025
(73) Proprietor: CNH Industrial Italia S.p.A., 10156 Torino (IT)
(72) Inventor: Livornese, Isabella, 10156 Turin (IT); Monacelli, Gennaro, 10156 Turin (IT); Molinari, Riccardo, 10156 Turin (IT); Mariniello, Ciro, 10156 Turin (IT)
(74) Representative: CNH Industrial IP Department

(56) References cited:
- EP-A1- 3 839 920
- US-B2- 9 558 676

## Description

### TECHNICAL FIELD

The present invention concerns an improved control method for controlling a driving simulator for simulating the driving of a vehicle, as well as for controlling a vehicle. It also concerns a corresponding computer program product, said driving simulator and said vehicle.

The present invention finds its preferred, although not exclusive, application in heavy vehicles such as agricultural or work vehicles. Reference will be made to this application by way of example below.

### BACKGROUND OF THE INVENTION

As known, driving simulators provide to the user the experience of driving a real vehicle in a virtual environment. For a full immersion of the user into this experience, the dynamic vehicle simulation and the feedback provided to the user must be as accurate as possible.

The driving simulator generally comprises a platform on which it is mounted a cabin wherein the user can seat to virtually drive the vehicle in the simulation.

The document EP 3 839 920 A1 discloses a conventional control method for controlling a driving simulator operable by a driver, the driving simulator comprising a platform and a cabin mounted on the platform and configured to be moved by the platform. There are different kinds of known platforms for the driving simulators (mainly in the form of hexapods, such as the Gough-Steward platform). In details, they are classified based on the number of degrees of freedom (DOF) of the movements that the platform can perform. For example, these DOFs can be 6 in total, comprising three rotational DOFs (roll, pitch, yaw) and three linear or translational DOFs (surge, heave, sway), even though other numbers of DOFs can be considered (e.g., nine or three).

During use, the platform is controlled so that the cabin moves with respect to an inertial reference system in such a way to make the user, present in the cabin and experiencing the virtual simulation, perceive the movements of the cabin relatively to the inertial reference system as the feedback that the user would receive while driving a real vehicle.

Since it is impossible to exactly reproduce the large-scale motion of a real vehicle in the limited movement space of the platform, a proper motion strategy must be set to cheat the human perception of the sensed acceleration, in order to reproduce those large motions while using shorter movements.

Motion cueing algorithms (MCAs) are the control strategies that allow to control the motion of the platform during the simulation so that the user perceives feedback that are analogous to when driving the real vehicle.

For example, MCAs analyse and control the dynamics of the simulated vehicle based on components at different frequences, some of them being reproduced by the platform using the limited space movements and others being reproduced by inclining the platform relatively to the inertial reference system, thus saving movement space. This control of the dynamics of the platform tries to cheat the human vestibular perception in order to improve the perceived quality of the simulation (i.e., to increase its fidelity with respect to the real driving experience).

However, it has been noted that this control can generate the perception of false cues not matching with the intended visual stimulation and, even more importantly, it can generate fatigue and discomfort in the user experiencing the virtual simulation.

In fact, it has been verified that the same MCA (i.e., same algorithm type and same tuning parameters used) can lead to positive driving experiences for some of the drivers and but can also cause sickness (e.g., nausea) and lead to negative driving experiences for other drivers. Furthermore, the same algorithm can reproduce perfect alignment with the real driving experience for some drivers, whereas it can lead to a total mismatch with the real driving experience for other drivers.

Therefore, the need is felt to overcome the above-mentioned issues.

An aim of the present invention is thus to satisfy the above-mentioned needs.

### SUMMARY OF THE INVENTION

The aforementioned aim is reached by a control method, a corresponding computer program product, a driving simulator and a vehicle, as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic perspective view of a driving simulator, according to an embodiment of the present invention;
- Figure 2 is a block diagram showing a control method implemented by the driving simulator of Figure 1, according to an embodiment of the present invention; and
- Figure 3 is a block diagram showing a detail of the driving simulator of Figure 1 configured to implement the control method of Figure 2, according to an embodiment of the present invention.

### DETAILED DESCRIPTION OF THE INVENTION

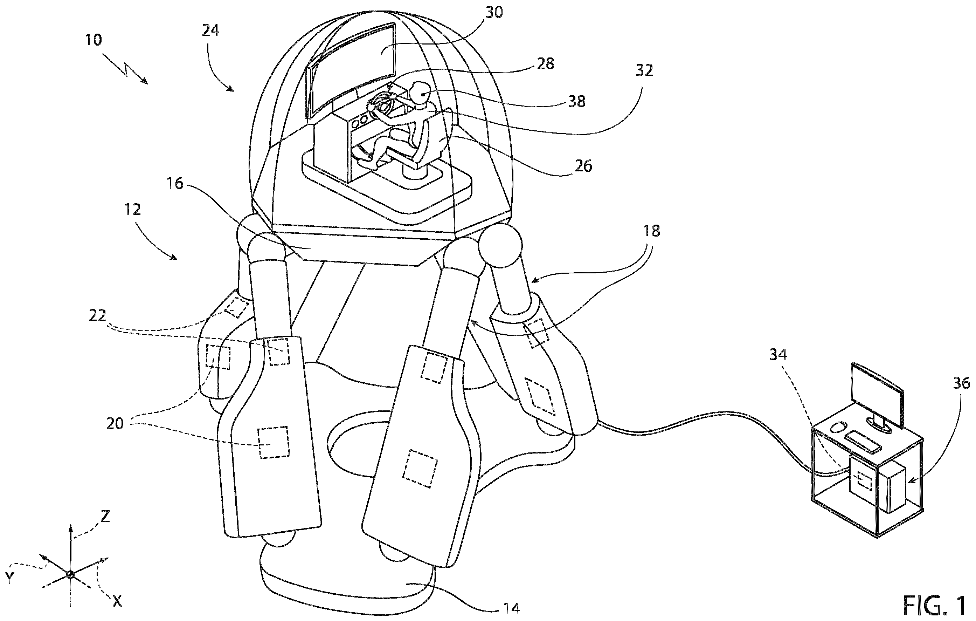

Figure 1 shows, in a Cartesian reference system defined by axes X, Y, Z that are orthogonal between each other, a driving simulator 10 for simulating the driving of a vehicle by a user (i.e., a driver of the vehicle).

The vehicle is not shown and is preferably a heavy vehicle, in particular a work vehicle (e.g., a construction equipment vehicle such as a wheel loader) or an agricultural vehicle (e.g., a tractor), of a per se known type.

The driving simulator 10 comprises a platform 12 controllable based on a motion cueing algorithm (MCA), as better discussed in the following.

The platform 12 comprises a reference basis 14 and a movable basis 16, physically coupled between each other through coupling means 18 that are electrically controllable based on the outputs of the MCA.

In particular, the reference basis 14 is fixed during use (e.g., is fixed to the ground) and defines an inertial reference system for the platform 12.

The movable basis 16 is movable (e.g., through linear displacements and/or inclinations) with respect to the reference basis 14 through the coupling means 18.

The coupling means 18 are configured to move the movable basis 16 with respect to the reference basis 14. In details and as shown in Figure 1, the coupling means 18 can comprise deformable arms which can longitudinally deform (i.e., elongate or shorten along an axial direction of the deformable arm) and which have each one, along its longitudinal axis, opposite ends that are movably coupled respectively to the reference basis 14 and to the movable basis 16.

For example, each deformable arm can comprise at least one telescopic cylinder provided with a housing that slidingly houses a respective rod so as to elongate or shorten the deformable arm along its longitudinal axis in order to respectively increase or reduce the relative distance between its opposite ends. The ends can be coupled by rotatably joints or hinges at the free end of the rod and at the opposite end of the housing.

In particular, the coupling means 18 comprise actuators 20 that are configured to be electrically controlled and, in response to said control, actuate the coupling means 18 in order to move the movable basis 16 with respect to the reference basis 14.

For example, the actuators 20 can comprise electrically controlled valves configured to control a fluid flow towards the telescopic cylinder thereby allowing the extension or retraction of the rod. No further detail is provided on such aspect, being linked to a standard hydraulic circuit that is not relevant with respect to the present invention.

For example, the movable basis 16 can move with respect to the reference basis 14 according to six DOFs.

According to an exemplary and non-limiting embodiment, the platform 12 can have a known hexapod structure.

The platform 12 can also comprise sensors 22 configured to measure in real-time kinematics data of the platform 12, indicative of kinematics information of the platform 12. For example, the kinematics data may comprise positions and speeds of the actuators 20 so that, from the kinematics data, it is possible to determine information such as the position, the angular orientation, the trajectory and the speed of the movable basis 16 relatively to the reference basis 14.

For example, the sensors 22 are comprised in the coupling means 18 and can be known sensors such as linear displacement sensors, rotational sensors, etc.

The driving simulator 10 further comprises a cabin 24 placed on the movable basis 16 and fixed to it.

The cabin 24 defines a cabin reference system which is movable with respect to the inertial reference system according to the motion of the movable basis 16 with respect to the reference basis 14.

The cabin 24 is accessible to a driver (shown in Figure 1 with the reference 32), which is in the cabin 24 during the driving simulation.

The cabin 24 can resemble the cabin of the vehicle under simulation, in order to increase the quality of the virtual experience. Therefore, the cabin 24 can comprise a seat 26, where the driver 32 can seat during the simulation, and driving control means 28 (e.g., a steering wheel and control levers), operable by the driver 32 to drive the vehicle in the simulation. Moreover, the cabin 24 can comprise interface means 30 configured to interface the driver 32 with the simulation and thus to provide to the driver 32 the feedback and stimulus of the driving simulation. In details, this feedback can be a visual, haptic and sonorous feedback. For example and as shown in Figure 1, the interface means 30 can comprise a display configured to show to the driver 32 the simulated environment outside the cabin 24, so that the driver 32 can react to the simulated conditions.

The driving simulator 10 further comprises computational resources operatively coupled to the platform 12 and the cabin 24 in order to carry out the driving simulation.

In details, the computational resources acquire data from the platform 12 and the cabin 24 (e.g., the kinematical data of the platform 12 generated by the sensors 22 and the driving commands provided by the driver 32 through the driving control means 28) and control accordingly the platform 12 (e.g., through the actuators 20) and the cabin 24 (e.g., the interface means 30) in order to carry out the driving simulation.

According to the exemplary and non-limiting embodiment of Figure 1, the computational resources comprise a control unit 34 which is here shown as external to the platform 12 and the cabin 24 and present in a server 36 electrically coupled to the platform 12 and the cabin 24. The control unit 34 is an electronic control unit, such as a processor or a dedicated control unit.

However, other embodiments of the computational resources can be analogously considered. For example, the control unit 34 may be present in a computer (e.g., a PC) external to the platform 12 and the cabin 24, or may be comprised in the platform 12 or the cabin 24. Moreover, the computational resources may include cloud resources configured to carry out the driving simulation.

In the following, it is exemplarily considered the case of the control unit 34 of Figure 1.

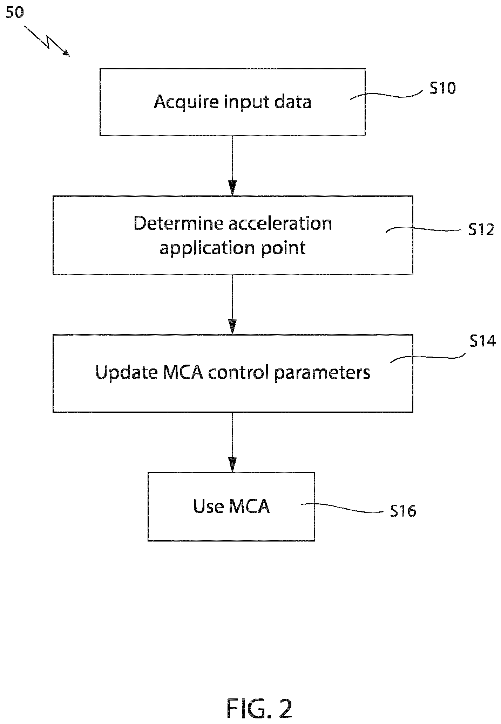

In details, the control unit 34 implements in use a control method 50 in order to carry out the driving simulation. The control method 50 is exemplarily shown in Figure 2.

In particular, the control method 50 allows to control the platform 12 and the cabin 24 so that the driver 32 present in the cabin 24 can experience the driving simulation.

At a step S10 of the control method 50, the control unit 34 acquires input data.

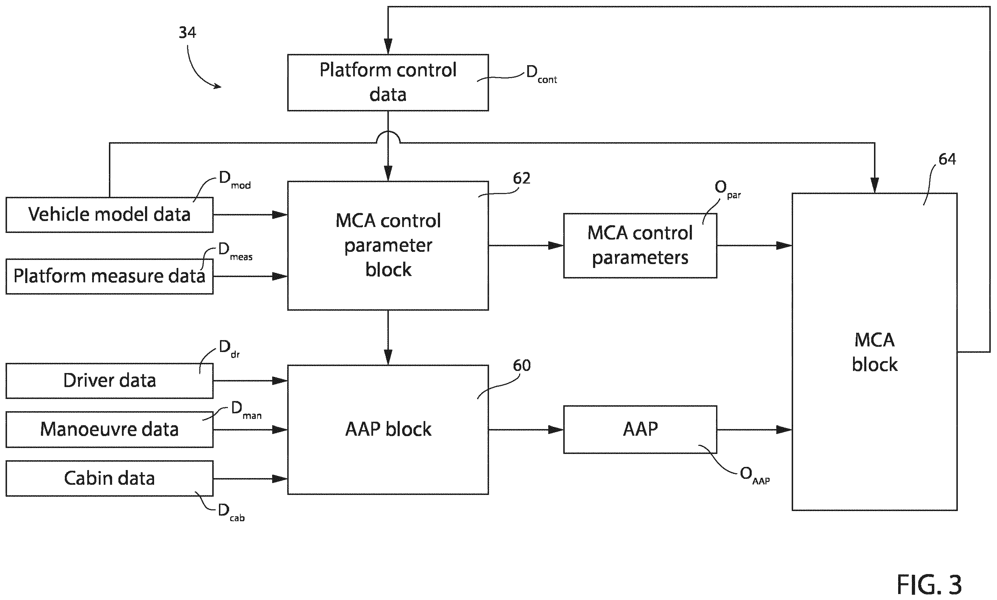

As better shown in Figure 3, the input data comprise at least driver data and/or manoeuvre data.

In details, the driver data are indicative of physical parameters of the driver 32 and the manoeuvre data are indicative of a manoeuvre to be executed by the vehicle in the simulation. For example, the driver data comprise at least a height of the driver 32 and may also comprise other physical parameters of the driver 32, such as a weight of the driver 32. Moreover, the manoeuvre data can simply identify the manoeuvre to be executed (e.g., "braking", "accelerating", "weightlifting", etc.) or may provide detailed information about the manoeuvre to be executed (e.g., the deceleration profile in the exemplary case of braking).

Optionally, the input data may also comprise cabin data indicative of the type (thus, of the physical parameters) of the cabin 24 used for the simulation. The cabin data can simply identify the cabin 24 of the vehicle under simulation or may provide detailed information about the physical structure of the cabin 24 (e.g., the distance of the driving control means 28 from the seat 26, the height of the seat 26, etc.).

For example, the driver data, the manoeuvre data and the cabin data may be manually provided by the driver 32 before starting the simulation, or by another user controlling the simulation from outside the cabin 24.

The input data further comprise vehicle model data, platform measure data and platform control data.

The vehicle model data comprise data generated by a model of the vehicle under simulation, which thus are indicative of simulated working parameters of the vehicle under simulation. In details, the vehicle model data comprise at least a simulated acceleration of the vehicle, acquired in a vehicle reference point which is fixed and predefined and depends on the model used to represent the vehicle. For example, the vehicle reference point can correspond to the physical point in the cabin of the vehicle under simulation wherein the head of a general driver is present during the driving. Moreover, the vehicle model data can also comprise a simulated rotational speed of the vehicle (in details, of the cabin 24), acquired in the vehicle reference point. In details, the model used to represent the vehicle can be a physical model of the vehicle, of a per se known type, that may be implemented by the control unit 34.

The platform measure data are indicative of kinematics information of the platform 12 and, in details, of the movable basis 16 (thus, they are correlated to respective kinematics information of the cabin 24 fixed to the movable basis 16). The kinematics information of the platform 12 is acquired in real-time through the sensors 22. In further details, the kinematics information of the platform 12 comprises information about the positions, speeds and accelerations (i.e., linear accelerations) of the actuators 20 controlling the motion of the movable basis 16. According to per se known techniques, the positions, speeds and accelerations of the actuators 20 can also be converted in angular positions, rotational speeds and accelerations of the cabin 24. Thus, the kinematics information of the platform 12 can also comprise the angular positions, rotational speeds and accelerations of the cabin 24.

The platform control data are indicative of the commands provided to the platform 12 in order to control the motion of the movable basis 16 and thus of the cabin 24. In details, these commands are provided in real-time to the actuators 20 in order to control the motion of the movable basis 16. As better discussed in the following, the platform control data are outputted by the MCA at each control iteration and are used as inputs in the following control iteration. For example, they comprise information about the acceleration commands for the platform 12.

At a step S12 of the control method 50, the control unit 34 determines an acceleration application point (AAP) based on the input data and, in particular, based on the driver data and/or the manoeuvre data (as well as, optionally, the cabin data).

The AAP is the point in space wherein the simulated acceleration of the vehicle, calculated by the vehicle model, is applied by controlling accordingly the platform 12. In other words, the platform 12 is controlled so that the simulated acceleration of the vehicle is applied in the AAP.

For example, the AAP is considered in the cabin reference system and thus is identified by coordinates in the cabin reference system. In general, the AAP does not coincide with the vehicle reference point in which the simulated acceleration of the vehicle is determined by the model and this has been verified to improve the quality of the driving simulation for the drivers, as better discussed in the following.

As better discussed in the following, the AAP can be tailored to the driver 32 and/or can be dynamically updated based on the manoeuvre to be executed.

At a step S14 of the control method 50, the control unit 34 updates MCA control parameters based on the input data and, in particular, based on the vehicle model data, the platform measure data and the platform control data.

The MCA control parameters are control parameters of the MCA, i.e. parameters used in the MCA to generate the platform control data used to control the platform 12. These control parameters influence the functioning of the MCA so that, when updated based on the input data, they allow an optimized working of the MCA. For example, the MCA control parameters may comprise a variable gain of the MCA and variable cut-off frequencies of filters (in details, high-pass filters) of the MCA.

The updating of the MCA is better described in the following.

At a step S16 of the control method 50, the control unit 34 uses the MCA based on the AAP determined at step S12 and the MCA control parameters updated at step S14. The MCA is run in order to generate the platform control data used to control the platform 12 (e.g., in a control iteration of the control method 50 that is successive to the current one in which the platform control data are generated).

In details, the MCA is a per se known motion cueing algorithm (e.g., as disclosed in GARRETT, N.J.I. and BEST, M.C., 2010. Driving simulator motion cueing algorithms - a survey of the state of the art. IN: Proceedings of the 10th International Symposium on Advanced Vehicle Control (AVEC), Loughborough, UK, 22nd-26th August, pp. 183-188). Therefore, its structure and functioning are not further described.

In further details, the MCA receives as inputs the AAP, the MCA control parameters and the vehicle model data. The MCA control parameters are used to configure and optimize the settings of the MCA. Based on this optimized configuration of the MCA, the MCA is run in order to generate the platform control data that allow to have the simulated acceleration of the vehicle in the AAP.

Therefore, the platform control data can be used to control the platform 12.

Figure 3 schematically shows blocks of the control unit 34 and their working in order to carry out the control method 50.

In details, the control unit 34 comprises an AAP block 60 configured to implement step S12, an MCA control parameter block 62 configured to implement step S14 and an MCA block configured to implement step S16.

In Figure 3, the driver data, the manoeuvre data, the cabin data, the vehicle model data, the platform measure data and the platform control data are also indicated with the respective references D_{dr}, Dₘₐₙ, D_{cab}, D_{mod}, Dₘₑₐₛ, D_{cont}. Moreover, the MCA control parameters and the AAP are also indicated with the respective references Oₚₐᵣ and O_{AAP}.

The AAP block 60 receives as inputs the driver data, the manoeuvre data and the cabin data and determines the AAP based on these inputs.

According to an embodiment, the AAP block 60 receives as inputs only the driver data and determines the AAP based on the driver data.

In details, the AAP is determined as the point in the cabin 24 wherein, considering the physical parameters of the driver 32, the head of the driver 32 is expected to be. In other words, the AAP corresponds to the point in space (for example defined and fixed in the cabin reference system) where the driver 32 normally has the head during the simulation. As evident, the position of the head of the driver 32 is defined considering a normal and correct driving position of the driver 32 (e.g., correctly seated on the seat 26). For example, the AAP is placed in the centre of the head of the driver 32 (shown in Figure 1 with the reference 38).

For example, the AAP is determined considering the height of the driver 32. In fact, it is evident that drivers with different heights have the respective heads at different distances from the floor of the cabin 24. For example, if the AAP for a first driver is placed in (x, y, z) in the cabin reference system, the AAP for a second driver which is Δz smaller than the first driver is approximately placed in (x, y, z-Δz) in the cabin reference system.

The AAP can also be determined considering other physical parameters of the driver 32. For example, if a first driver has a significantly greater weight than a second driver and they have similar heights, the AAP for the first driver is further away from the seat 26 with respect to the AAP for the second driver.

Therefore, in this embodiment the AAP is fixed in space and specific for the considered driver 32.

According to a different embodiment, the AAP block 60 receives as inputs only the manoeuvre data and determines the AAP based on the manoeuvre data.

In details, the AAP is determined by considering a predefined AAP (corresponding to a predefined and fixed point is space wherein the simulated acceleration of the vehicle would be applied in absence of specific manoeuvres performed, such as approximately at a headrest of the seat 26) and a dynamic contribution dependent on the manoeuvre that is being executed. The dynamic contribution displaces in space the AAP with respect to the predefined AAP by an amount and direction which depend on the specific manoeuvre. Therefore, the AAP that is output by the AAP block 60 corresponds to the vectorial sum of the predefined AAP (fixed in the cabin reference system) and the dynamic contribution (variable depending on the manoeuvre).

For example, the dynamic contributions for the manoeuvres that can be simulated are determined empirically and are stored, together with the respective manoeuvres, in a database (e.g., a look-up table stored in the control unit 34). Therefore, during use the database is accessed and searched based on the manoeuvre under simulation, in order to find the associated dynamic contribution to be used to determine the AAP. For example, the dynamic contributions can be determined for all the manoeuvres under simulation based on statistical studies: for example, this may comprise receiving feedback from a multiplicity of drivers subjected to the same manoeuvre and for a plurality of candidate dynamic contributions, and selecting the candidate dynamic contribution which has resulted in the highest degree of satisfaction by the drivers for the considered manoeuvre. For example, the dynamic contributions for the different manoeuvres can be determined such that the final AAP always extends within the cabin 24.

However, other techniques or criteria can be analogously used to determine the dynamic contribution for each manoeuvre.

According to a non-limiting example provided for description purposes, when a braking manoeuvre is considered, the AAP may be determined by displacing the predefined AAP toward the front side of the cabin 24 (i.e., in front of the driver 32) by an amount which is either fixed or proportional to the braking deceleration (thus depending on a time profile of the manoeuvre). Therefore, in this exemplary case the predefined AAP may be defined by (x_{pred}, y_{pred}, z_{pred}) in the cabin reference system, the dynamic contribution may be defined by (0, +Δy, 0) in the cabin reference system and thus the final AAP may be defined by (x_{pred}, y_{pred}+Δy, z_{pred}) in the cabin reference system, where the Y axis in the cabin reference system corresponds to a sagittal axis of the driver 32 during the simulation.

Therefore, in this embodiment the AAP is movable in space depending on the manoeuvre and substantially independent from the physical parameters of the considered driver 32.

According to a different embodiment, the AAP block 60 receives as inputs both the driver data and the manoeuvre data and determines the AAP based on both the driver data and the manoeuvre data.

In this case, the two previously discussed embodiments may be combined together so that the AAP is defined by the predefined AAP, that is determined based on the driver data, and by the dynamic contribution, that is determined based on the manoeuvre data. Moreover, the dynamic contribution may also depend on the driver data since the dynamic contribution may also be selected among a plurality of options based on the physical parameters of the considered driver 32.

According to a further embodiment based on anyone of the previously discussed embodiments, the AAP block 60 may also receive as inputs the cabin data and may determine the AAP also based on the cabin data. For example, the cabin data may be used to determine the predefined AAP, considering the structural parameters of the cabin 24 which influence the position of the driver 32 inside it.

With reference again to Figure 3, the MCA control parameter block 62 receives as inputs the vehicle model data, the platform measure data and the platform control data and updates the MCA control parameters based on these inputs.

In details, the MCA control parameters may be updated with respect to past determinations of the MCA control parameters (e.g., with respect to the MCA control parameters determined at the previous control iteration) or with respect to a predefined set of MCA control parameters.

Advantageously, the MCA control parameters are updated by minimizing a cost function that depends on quantities such as the platform measure data (e.g., the positions and speeds of the actuators 20), an error between the vehicle model data and the platform control data (e.g., between the vehicle acceleration and the platform acceleration) and an error between the currently considered variable gain and a gain default value. In particular, the platform measure data are indicative of measurements performed on the platform 12 when the platform is controlled based on the platform control data previously determined (thus determined using the previously determined AAP): therefore, the platform measure data are evidently function of the previously determined AAP and thus the cost function is also dependent on the AAP.

According to an exemplary and non-limiting embodiment, the cost function may be defined by the following mathematical expression: $J = \frac{1}{2} \left[{W}_{1}{\left({x}^{¨}-{{x}^{¨}}_{s}\right)}^{2}+{W}_{2}{\left(\dot{θ}-{\dot{θ}}_{s}\right)}^{2}+{W}_{3}\left({\sum }_{i = 1}^{N} {L}_{i}^{4}\right)+{W}_{4}\left({\sum }_{i = 1}^{N} {\dot{L}}_{i}^{2}\right)+{\sum }_{i = 1}^{N} {W}_{i} Δ {P}_{i}^{2}\right]$ wherein *J* is the cost function, ***ẍ*** is the simulated acceleration of the vehicle comprised in the vehicle model data, ***ẍₛ*** is the measured acceleration of the platform 12 (for example determined based on the measured accelerations of the actuators 20, comprised in the platform measure data), ***θ̇*** is the simulated rotational speed of the vehicle comprised in the vehicle model data, ***θ̇****ₛ* is the measured rotational speed of the cabin 14 (for example determined based on the measured positions and speeds of the actuators 20, comprised in the platform measure data), ***Lᵢ*** is a respective length correlated to the measured position of the i-th actuator 20 comprised in the platform measure data, ***L̇ᵢ*** is a respective speed correlated to the measured speed of the i-th actuator 20 comprised in the platform measure data, **Δ*Pᵢ*** is a difference between gains of the MCA, ***N*** is the number of actuators 20 controlling the motion of the movable basis 16 (e.g., N=6), and ***W*₁** to ***W*₄** are predefined multiplication coefficients.

By minimizing the cost function according to per se known iterative approaches, the optimized MCA control parameters can be determined so that they may be available for the MCA.

The MCA block 64 is coupled to the AAP block 60 and the MCA control parameter block 62.

The MCA block 64 receives as inputs the vehicle model data, the MCA control parameters from the MCA control parameter block 62 and the AAP from the AAP block 60 and uses the MCA based on these inputs to determine the new platform control data.

In details, the MCA block 64 implements the MCA in a per se known way, when configured according to the MCA control parameters and so that the new platform control data control the platform 12 is such a way that the simulated acceleration of the vehicle is applied in the AAP.

Moreover, the control method 50 is implemented through a computer program product storable in the computational resources (e.g., in the control unit 34) and designed so that, when executed in the computational resources, the computational resources become configured to implement the control method 50.

In view of the foregoing, the advantages of the control method, the corresponding computer program product, the driving simulator and the vehicle according to the invention are apparent.

In particular, the driving simulator 10 and the control method 50 improve the quality of the vehicle driving simulation by reducing the cue-mismatch compared to the real driving experience and thus reducing the fatigue and discomfort felt by the driver experiencing the virtual simulation.

In details, this is achieved by customizing the AAP on the specific driver and on the specific manoeuvre to be executed and by optimizing the MCA control parameters based on the AAP, in order to improve the functioning of the MCA.

It is clear that modifications can be made to the described control method, computer program product, driving simulator and vehicle, which do not extend beyond the scope of protection defined by the claims.

For example, the manoeuvre data can comprise measurements from the vehicle (e.g., geolocational data of the vehicle, acceleration data of the vehicle, etc.) which are not directly indicative of the manoeuvre, but which are indirectly correlated to the manoeuvre that is being performed in a per se known way, for example through known manoeuvre recognition algorithms. In this case, the AAP block 60 firstly recognizes the manoeuvre based on the manoeuvre data and then determines the AAP accordingly.

Moreover, the driver data may also comprise a driver identification code specifically associated to the driver 32, and not directly the physical parameters of the driver 32. In this case, the AAP block 60 firstly determines the physical parameters of the driver 32 by using the driver identification code and then determines the AAP accordingly. For example, in this case the control unit 34 stores a look-up table that associate to each stored driver identification code the respective physical parameters of the driver 32 so that the physical parameters of the driver 32 can be obtained by searching in the look-up table through the driver identification code.

Furthermore, the outputs of the present MCA may also be used to directly control the real-life vehicle, i.e. not only a virtual simulation of the same. For example, the MCA block 64 may also generate vehicle control data that are used to control the vehicle in real-time, e.g. to adjust one or more functionalities of the same for example in order to reduce the driver's discomfort while driving. For example, the suspensions of the vehicle may be operated according to a suspension response profile which is chosen or generated by the MCA or based on the outputs of the MCA.

Therefore, more in general the MCA block 64 generates control data which may comprise platform control data for controlling the platform 12 for the driving simulation and/or vehicle control data for controlling the vehicle in real-life functioning.

For example, in this case the vehicle comprises the previously mentioned computational resources configured to implement the control method 50 in order to control the vehicle itself.

Moreover, the platform 12 may have a structure different from what has been previously described, as per se known. For example, even though the platform 12 was described as having 6 DOFs, other structures can be analogously considered (e.g., having 3 or 9 DOFs). For example and as per se known, in the 9 DOFs case the platform 12 may also comprise an intermediate basis which is coupled to the reference basis 14 and to the movable basis 16 and is configured to horizontally move over the reference basis 14 while carrying the movable basis 16, which can be moved (e.g., inclined) with respect to the intermediate basis. In this case, the combined movements of the intermediate basis relatively to the reference basis 14 and of the movable basis 16 relatively to the intermediate basis define the overall motion of the platform 12.

## Claims

1. A control method (50) for controlling a driving simulator (10) or a vehicle, operable by a driver (32),
the driving simulator (10) comprising a platform (12) and a cabin (24) mounted on the platform (12) and configured to be moved by the platform (12),
the control method (50) being implemented by computational resources (34) and comprising the steps of:
- acquiring (S10) input data comprising at least driver data and/or manoeuvre data, the driver data being indicative of physical parameters of the driver (32) and the manoeuvre data being indicative of a manoeuvre to be simulated by the driving simulator (10) or executed by the vehicle, the input data further comprising vehicle model data comprising at least a simulated acceleration of the vehicle;
- determining (S12), based on the input data, an acceleration application point, AAP, corresponding to the point in space at the cabin (24) or the vehicle wherein the simulated acceleration of the vehicle is to be applied;
- updating (S14) motion cueing algorithm, MCA, control parameters based on the input data; and
- using (S16), based on the AAP and the MCA control parameters, a MCA to generate control data for controlling the driving simulator (10) or the vehicle.

2. The control method of claim 1, wherein the control method (50) is used to control said driving simulator (10) operable by the driver (32),
wherein the manoeuvre data are indicative of the manoeuvre to be simulated by the driving simulator (10) and the AAP corresponds to the point in space at the cabin (24) wherein the simulated acceleration of the vehicle is to be applied, and
wherein the control data comprise platform control data for controlling the platform (12) and thus the motion of the cabin (24).

3. The control method of claim 2, wherein the step of determining (S12) the AAP based on the input data comprises determining the AAP based on the driver data by setting the AAP in a position wherein, based on the physical parameters of the driver (32), is configured to be present a head of the driver (32) when the driver operates the driving simulator (10).

4. The control method of claim 2, wherein the step of determining (S12) the AAP based on the input data comprises determining the AAP based on the manoeuvre data by setting the AAP in a position determined based on a predefined AAP and a dynamic contribution dependent on the manoeuvre to be simulated.

5. The control method of claim 3 and 4, wherein the predefined AAP is said position wherein, based on the physical parameters of the driver (32), is configured to be present the head of the driver (32) when the driver operates the driving simulator (10).

6. The control method of anyone of claims 3-5, wherein the input data further comprise cabin data indicative of physical parameters of the cabin (24), and
wherein the step of determining (S12) the AAP based on the input data comprises determining the AAP also based on the cabin data.

7. The control method of anyone of claims 2-6, wherein the vehicle model data are indicative of simulated working parameters of the vehicle under simulation,
wherein the input data further comprise previous platform control data and platform measure data, the platform measure data being indicative of measured kinematics information of the platform (12),
wherein the step of updating (S14) the MCA control parameters based on the input data comprises minimizing a cost function that depends on the vehicle model data, the platform measure data and the previous platform control data, and
wherein the MCA control parameters are parameters of said cost function and of the MCA.

8. The control method of claim 7, wherein the cost function is defined by the mathematical expression: $J = \frac{1}{2} \left[{W}_{1}{\left({x}^{¨}-{{x}^{¨}}_{s}\right)}^{2}+{W}_{2}{\left(\dot{θ}-{\dot{θ}}_{s}\right)}^{2}+{W}_{3}\left({\sum }_{i = 1}^{N} {L}_{i}^{4}\right)+{W}_{4}\left({\sum }_{i = 1}^{N} {\dot{L}}_{i}^{2}\right)+{\sum }_{i = 1}^{N} {W}_{i} Δ {P}_{i}^{2}\right]$ wherein ***J*** is the cost function, ***ẍ*** is a simulated acceleration of the vehicle comprised in the vehicle model data, ***ẍₛ*** is a measured acceleration of the platform (12) comprised in the platform measure data, ***θ̇*** is a simulated rotational speed of the cabin (24) comprised in the vehicle model data, ***θ̇ₛ*** is a measured rotational speed of the cabin (24) comprised in the platform measure data, ***Lᵢ*** are lengths correlated to measured positions of the platform (12) comprised in the platform measure data, ***L̇ₗ*** are speeds correlated to measured speeds of the platform (12) comprised in the platform measure data, **Δ*Pᵢ*** is a difference between gains of the MCA, ***N*** is a number of actuators (20) of the platform (12) controlling the motion of the platform (12), and ***W*₁** to ***W*₄** are predefined multiplication coefficients.

9. The control method of anyone of claims 2-8, wherein the step of using (S16) the MCA based on the AAP and the MCA control parameters comprises configuring the MCA through the MCA control parameters and generating, through the configured MCA and based on the AAP and the simulated acceleration of the vehicle, said platform control data so that the platform (12) is operated in such a way that the simulated acceleration of the vehicle is applied in the AAP.

10. Computer program product storable in computational resources and designed so that, when executed in the computational resources, the computational resources become configured to implement a control method (50) according to anyone of the preceding claims.

11. A driving simulator (10) operable by a driver (32) and comprising:
a platform (12);
a cabin (24) mounted on the platform (12) and configured to be moved by the platform (12); and
computational resources (34) operatively coupled to the platform (12) and configured to:
- acquire input data comprising at least driver data and/or manoeuvre data, the driver data being indicative of physical parameters of the driver (32) and the manoeuvre data being indicative of a manoeuvre to be simulated by the driving simulator (10), the input data further comprising vehicle model data comprising at least a simulated acceleration of the vehicle;
- determine, based on the input data, an acceleration application point, AAP, corresponding to the point in space at the cabin (24) wherein the simulated acceleration of the vehicle is to be applied;
- update motion cueing algorithm, MCA, control parameters based on the input data; and
- use, based on the AAP and the MCA control parameters, a MCA to generate control data for controlling the driving simulator (10).

12. The driving simulator of claim 11, wherein the computational resources comprise a control unit (34) including:
- an AAP block (60) configured to determine the AAP;
- an MCA control parameter block (62) configured to update the MCA control parameters; and
- an MCA block (64) coupled to the AAP block (60) and the MCA control parameter block (62) and configured to use the MCA to generate the control data.

13. The driving simulator of claim 11 or 12, wherein the platform (12) comprises:
- a reference basis (14);
- a movable basis (16), the cabin (24) being fixed to the movable basis (16); and
- coupling means (18) physically coupling between them the reference basis (14) and the movable basis (16) and comprising actuators (20) configured to be electrically controlled based on the control data so as to move the movable basis (16) with respect to the reference basis (14).

14. The driving simulator of claim 13, wherein the platform (12) further comprises sensors (22) configured to acquire platform measure data indicative of kinematics information of the platform (12), the platform measure data being further comprised in the input data.

15. A vehicle operable by a driver (32) and comprising computational resources configured to:
- acquire input data comprising at least driver data and/or manoeuvre data, the driver data being indicative of physical parameters of the driver (32) and the manoeuvre data being indicative of a manoeuvre to be executed by the vehicle, the input data further comprising vehicle model data comprising at least a simulated acceleration of the vehicle;
- determine, based on the input data, an acceleration application point, AAP, corresponding to the point in space at the vehicle wherein the simulated acceleration of the vehicle is to be applied;
- update motion cueing algorithm, MCA, control parameters based on the input data; and
- use, based on the AAP and the MCA control parameters, a MCA to generate control data for controlling the vehicle.

## Patentansprüche

1. Steuerverfahren (50) zum Steuern eines Fahrsimulators (10) oder eines Fahrzeugs, bedienbar durch einen Fahrer (32),
wobei der Fahrsimulator (10) eine Plattform (12) und eine Kabine (24) umfasst, die auf der Plattform (12) montiert und konfiguriert ist, um von der Plattform (12) bewegt zu werden,
wobei das Steuerverfahren (50) durch Rechenressourcen (34) implementiert wird und die Schritte umfasst:
- Erfassen (S10) von Eingabedaten, die mindestens Fahrerdaten und/oder Manöverdaten umfassen, wobei die Fahrerdaten physikalische Parameter des Fahrers (32) anzeigen und die Manöverdaten ein durch den Fahrsimulator (10) zu simulierendes oder durch das Fahrzeug auszuführendes Manöver anzeigen, wobei die Eingabedaten ferner Fahrzeugmodelldaten umfassen, die mindestens eine simulierte Beschleunigung des Fahrzeugs umfassen;
- Bestimmen (S12), basierend auf den Eingabedaten, eines Beschleunigungsangriffspunkts, AAP, der dem Punkt im Raum an der Kabine (24) oder dem Fahrzeug entspricht, an dem die simulierte Beschleunigung des Fahrzeugs angewendet werden soll;
- Aktualisieren (S14) von Steuerparametern des Motion-Cueing-Algorithmus, MCA, basierend auf den Eingabedaten; und
- Verwenden (S16), basierend auf dem AAP und den MCA-Steuerparametern, eines MCA, um Steuerdaten zum Steuern des Fahrsimulators (10) oder des Fahrzeugs zu erzeugen.

2. Steuerverfahren nach Anspruch 1, wobei das Steuerverfahren (50) verwendet wird, um den Fahrsimulator (10) zu steuern, der durch den Fahrer (32) bedienbar ist,
wobei die Manöverdaten das durch den Fahrsimulator (10) zu simulierende Manöver anzeigen und der AAP dem Punkt im Raum an der Kabine (24) entspricht, an dem die simulierte Beschleunigung des Fahrzeugs anzuwenden ist und
wobei die Steuerdaten Plattformsteuerdaten zum Steuern der Plattform (12) und somit der Bewegung der Kabine (24) umfassen.

3. Steuerverfahren nach Anspruch 2, wobei der Schritt des Bestimmens (S12) des AAP basierend auf den Eingabedaten das Bestimmen des AAP basierend auf den Fahrerdaten durch Festlegen des AAP an einer Position umfasst, an der basierend auf den physischen Parametern des Fahrers (32) konfiguriert ist, dass sich ein Kopf des Fahrers (32) befindet, wenn der Fahrer den Fahrsimulator (10) bedient.

4. Steuerverfahren nach Anspruch 2, wobei der Schritt des Bestimmens (S12) des AAP basierend auf den Eingabedaten das Bestimmen des AAP basierend auf den Manöverdaten durch Festlegen des AAP in einer Position umfasst, die basierend auf einem vorgegebenen AAP und einem von dem zu simulierenden Manöver abhängigen dynamischen Beitrag bestimmt wird.

5. Steuerverfahren nach Anspruch 3 und 4, wobei der vorgegebene AAP die Position ist, wobei, basierend auf den physischen Parametern des Fahrers (32), konfiguriert ist, dass der Kopf des Fahrers (32) vorhanden ist, wenn der Fahrer den Fahrsimulator (10) bedient.

6. Steuerverfahren nach einem der Ansprüche 3 bis 5, wobei die Eingabedaten ferner Kabinendaten umfassen, die physikalische Parameter der Kabine (24) anzeigen, und
wobei der Schritt des Bestimmens (S12) des AAP basierend auf den Eingabedaten das Bestimmen des AAP auch basierend auf den Kabinendaten umfasst.

7. Steuerverfahren nach einem der Ansprüche 2 bis 6, wobei die Fahrzeugmodelldaten simulierte Betriebsparameter des in der Simulation befindlichen Fahrzeugs anzeigen,
wobei die Eingabedaten ferner vorherige Plattformsteuerdaten und Plattformmessdaten umfassen, wobei die Plattformmessdaten gemessene Kinematikinformationen der Plattform (12) anzeigen,
wobei der Schritt des Aktualisierens (S14) der MCA-Steuerparameter basierend auf den Eingabedaten das Minimieren einer Kostenfunktion umfasst, die von den Fahrzeugmodelldaten, den Plattformmessdaten und den vorherigen Plattformsteuerdaten abhängt, und
wobei die MCA-Steuerparameter Parameter der Kostenfunktion und des MCA sind.

8. Steuerverfahren nach Anspruch 7, wobei die Kostenfunktion durch den mathematischen Ausdruck definiert ist: $J = \frac{1}{2} \left[{W}_{1}{\left({x}^{¨}-{{x}^{¨}}_{s}\right)}^{2}+{W}_{2}{\left(\dot{θ}-{\dot{θ}}_{s}\right)}^{2}+{W}_{3}\left({\sum }_{i = 1}^{N} {L}_{i}^{4}\right)+{W}_{4}\left({\sum }_{i = 1}^{N} {\dot{L}}_{i}^{2}\right)+{\sum }_{i = 1}^{N} {W}_{i} Δ {P}_{i}^{2}\right]$ worin *J* die Kostenfunktion ist, 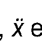 eine simulierte Beschleunigung des Fahrzeugs ist, die in den Fahrzeugmodelldaten enthalten ist, 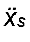 *ₛ* eine gemessene Beschleunigung der Plattform (12) ist, die in den Plattformmessdaten enthalten ist, *θ̇* eine in den Fahrzeugmodelldaten enthaltene simulierte Drehgeschwindigkeit der Kabine (24) ist, *θ̇ₛ* eine gemessene Drehgeschwindigkeit der Kabine (24) ist, die in den Plattformmessdaten enthalten ist, *Lᵢ* Längen sind, die mit gemessenen Positionen der Plattform (12) korreliert sind, die in den Plattformmessdaten enthalten sind, *L̇ₜ* Geschwindigkeiten sind, die mit gemessenen Geschwindigkeiten der Plattform (12) korreliert sind, die in den Plattformmessdaten enthalten sind, Δ*Pᵢ* eine Differenz zwischen Verstärkungen des MCA ist, *N* eine Anzahl von Aktuatoren (20) der Plattform (12) ist, welche die Bewegung der Plattform (12) steuern, und *W*₁ bis *W*₄ vorgegebene Multiplikationskoeffizienten sind.

9. Steuerverfahren nach einem der Ansprüche 2 bis 8, wobei der Schritt des Verwendens (S16) des MCA basierend auf dem AAP und den MCA-Steuerparametern das Konfigurieren des MCA durch die MCA-Steuerparameter und das Erzeugen, durch den konfigurierten MCA und basierend auf dem AAP und der simulierten Beschleunigung des Fahrzeugs, der Plattformsteuerdaten umfasst, sodass die Plattform (12) derart betrieben wird, dass die simulierte Beschleunigung des Fahrzeugs in dem AAP angewendet wird.

10. Computerprogrammprodukt, das in Rechenressourcen speicherbar und so ausgebildet ist, dass, wenn es in den Rechenressourcen ausgeführt wird, die Rechenressourcen konfiguriert werden, um ein Steuerverfahren (50) nach einem der vorhergehenden Ansprüche zu implementieren.

11. Fahrsimulator (10), der von einem Fahrer (32) bedienbar ist und umfasst:
eine Plattform (12);
eine Kabine (24), die auf der Plattform (12) montiert und konfiguriert ist, um von der Plattform (12) bewegt zu werden; und
Rechenressourcen (34), die mit der Plattform (12) wirkverbunden und konfiguriert sind zum:
- Erfassen von Eingabedaten, die mindestens Fahrerdaten und/oder Manöverdaten umfassen, wobei die Fahrerdaten physikalische Parameter des Fahrers (32) anzeigen und die Manöverdaten ein durch den Fahrsimulator (10) zu simulierendes Manöver anzeigen, wobei die Eingabedaten ferner Fahrzeugmodelldaten umfassen, die mindestens eine simulierte Beschleunigung des Fahrzeugs umfassen;
- Bestimmen, basierend auf den Eingabedaten, eines Beschleunigungsangriffspunkts, AAP, der dem Punkt im Raum an der Kabine (24) entspricht, an dem die simulierte Beschleunigung des Fahrzeugs anzuwenden ist;
- Aktualisieren von Steuerparametern des Motion-Cueing-Algorithmus, MCA, basierend auf den Eingabedaten und
- Verwenden eines MCA basierend auf dem AAP und den MCA-Steuerparametern, um Steuerdaten zum Steuern des Fahrsimulators (10) zu erzeugen.

12. Fahrsimulator nach Anspruch 11, wobei die Rechenressourcen eine Steuereinheit (34) umfassen, die einschließt:
- einen AAP-Block (60), der konfiguriert ist, um den AAP zu bestimmen;
- einen MCA-Steuerparameterblock (62), der konfiguriert ist, um die MCA-Steuerparameter zu aktualisieren; und
- einen MCA-Block (64), gekoppelt an den AAP-Block (60) und den MCA-Steuerparameterblock (62) und konfiguriert, um den MCA zu verwenden, um die Steuerdaten zu erzeugen.

13. Fahrsimulator nach Anspruch 11 oder 12, wobei die Plattform (12) umfasst:
- eine Bezugsbasis (14);
- eine bewegliche Basis (16), wobei die Kabine (24) an der beweglichen Basis (16) befestigt ist; und
- Kopplungsmittel (18), die die Bezugsbasis (14) und die bewegliche Basis (16) physisch miteinander koppeln und Aktuatoren (20) umfassen, die konfiguriert sind, um basierend auf den Steuerdaten elektrisch gesteuert zu werden, um die bewegliche Basis (16) in Bezug auf die Referenzbasis (14) zu bewegen.

14. Fahrsimulator nach Anspruch 13, wobei die Plattform (12) ferner Sensoren (22) umfasst, die konfiguriert sind, um Plattformmessdaten zu erfassen, die Kinematikinformationen der Plattform (12) anzeigen, wobei die Plattformmessdaten ferner in den Eingabedaten umfasst sind.

15. Fahrzeug, das durch einen Fahrer (32) bedienbar ist und Rechenressourcen umfasst, die konfiguriert sind zum:
- Erfassen von Eingabedaten, die mindestens Fahrerdaten und/oder Manöverdaten umfassen, wobei die Fahrerdaten physikalische Parameter des Fahrers (32) anzeigen und die Manöverdaten ein durch das Fahrzeug auszuführendes Manöver anzeigen, wobei die Eingabedaten ferner Fahrzeugmodelldaten umfassen, die mindestens eine simulierte Beschleunigung des Fahrzeugs umfassen;
- Bestimmen, basierend auf den Eingabedaten, eines Beschleunigungsangriffspunkts, AAP, der dem Punkt im Raum an dem Fahrzeug entspricht, an dem die simulierte Beschleunigung des Fahrzeugs anzuwenden ist;
- Aktualisieren von Steuerparametern des Motion-Cueing-Algorithmus, MCA, basierend auf den Eingabedaten und
- Verwenden eines MCA basierend auf dem AAP und den MCA-Steuerparametern, um Steuerdaten zum Steuern des Fahrzeugs zu erzeugen.

## Revendications

1. Procédé de commande (50) permettant de commander un simulateur de conduite (10) ou un véhicule, pouvant être actionné par un conducteur (32),
le simulateur de conduite (10) comprenant une plateforme (12) et une cabine (24) montée sur la plateforme (12) et conçue pour être déplacée par la plateforme (12),
le procédé de commande (50) étant mis en œuvre par des ressources de calcul (34) et comprenant les étapes consistant à :
- acquérir (S10) des données d'entrée comprenant au moins des données de conducteur et/ou des données de manœuvre, les données de conducteur indiquant des paramètres physiques du conducteur (32) et les données de manœuvre indiquant une manœuvre à simuler par le simulateur de conduite (10) ou à exécuter par le véhicule, les données d'entrée comprenant en outre des données de modèle de véhicule comprenant au moins une accélération simulée du véhicule ;
- déterminer (S12), en fonction des données d'entrée, un point d'application d'accélération, AAP, correspondant au point dans l'espace au niveau de la cabine (24) ou du véhicule, point auquel l'accélération simulée du véhicule doit être appliquée ;
- mettre à jour (S14) des paramètres de commande de l'algorithme de repérage de mouvement, MCA, en fonction des données d'entrée ; et
- utiliser (S16), en fonction de l'AAP et des paramètres de commande de MCA, d'un MCA pour générer des données de commande permettant de commander le simulateur de conduite (10) ou le véhicule.

2. Procédé de commande selon la revendication 1, dans lequel le procédé de commande (50) est utilisé pour commander ledit simulateur de conduite (10) pouvant être actionné par le conducteur (32),
dans lequel les données de manœuvre indiquent la manœuvre à simuler par le simulateur de conduite (10) et l'AAP correspond au point dans l'espace au niveau de la cabine (24), point auquel l'accélération simulée du véhicule doit être appliquée, et
dans lequel les données de commande comprennent des données de commande de plateforme permettant de commander la plateforme (12) et donc le mouvement de la cabine (24).

3. Procédé de commande selon la revendication 2, dans lequel l'étape consistant à déterminer (S12) l'AAP en fonction des données d'entrée comprend la détermination de l'AAP en fonction des données de conducteur en définissant l'AAP dans une position dans laquelle, en fonction des paramètres physiques du conducteur (32), une tête du conducteur (32) est configurée pour être présente lorsque le conducteur actionne le simulateur de conduite (10).

4. Procédé de commande selon la revendication 2, dans lequel l'étape consistant à déterminer (S12) l'AAP en fonction des données d'entrée comprend la détermination de l'AAP en fonction des données de manœuvre en définissant l'AAP dans une position déterminée en fonction d'un AAP prédéfini et d'une contribution dynamique dépendant de la manœuvre à simuler.

5. Procédé de commande selon la revendication 3 et 4, dans lequel l'AAP prédéfini est ladite position dans laquelle, en fonction des paramètres physiques du conducteur (32), la tête du conducteur (32) est configurée pour être présente lorsque le conducteur utilise le simulateur de conduite (10).

6. Procédé de commande selon l'une quelconque des revendications 3 à 5, dans lequel les données d'entrée comprennent en outre des données de cabine indiquant des paramètres physiques de la cabine (24), et
dans lequel l'étape consistant à déterminer (S12) l'AAP en fonction des données d'entrée comprend la détermination de l'AAP également en fonction des données de cabine.

7. Procédé de commande selon l'une quelconque des revendications 2 à 6, dans lequel les données de modèle de véhicule indiquent des paramètres de fonctionnement simulés du véhicule sous simulation,
dans lequel les données d'entrée comprennent en outre des données de commande de plateforme précédentes et des données de mesure de plateforme, les données de mesure de plateforme indiquant des informations cinématiques mesurées de la plateforme (12),
dans lequel l'étape consistant à mettre à jour (S14) des paramètres de commande MCA en fonction des données d'entrée comprend la réduction au minimum d'une fonction de coût qui dépend des données de modèle de véhicule, des données de mesure de plateforme et des données de commande de plateforme précédentes, et
dans lequel les paramètres de commande de MCA sont des paramètres de ladite fonction de coût et du MCA.

8. Procédé de commande selon la revendication 7, dans lequel la fonction de coût est définie par l'expression mathématique : $J = \frac{1}{2} \left[{W}_{1}{\left({x}^{¨}-{{x}^{¨}}_{s}\right)}^{2}+{W}_{2}{\left(\dot{θ}-{\dot{θ}}_{s}\right)}^{2}+{W}_{3}\left({\sum }_{i = 1}^{N} {L}_{i}^{4}\right)+{W}_{4}\left({\sum }_{i = 1}^{N} {\dot{L}}_{i}^{2}\right)+{\sum }_{i = 1}^{N} {W}_{i} Δ {P}_{i}^{2}\right]$ dans lequel *J* représente la fonction de coût, *ẍ* représente une accélération simulée du véhicule, comprise dans les données de modèle de véhicule, *ẍₛ* représente une accélération mesurée de la plateforme (12), comprise dans les données de mesure de plateforme, *θ̇* représente une vitesse de rotation simulée de la cabine (24), comprise dans les données de modèle de véhicule, *θ̇ₛ* représente une vitesse de rotation mesurée de la cabine (24), comprise dans les données de mesure de plateforme, *Lᵢ* représente des longueurs corrélées aux positions mesurées de la plateforme (12), comprises dans les données de mesure de plateforme, *L̇ᵢ* représente des vitesses corrélées aux vitesses mesurées de la plateforme (12), comprises dans les données de mesure de plateforme, Δ*Pᵢ* représente une différence entre des gains du MCA, *N* représente un nombre d'actionneurs (20) de la plateforme (12), commandant le mouvement de la plateforme (12), et *W*₁ à *W*₄ représentent des coefficients de multiplication prédéfinis.

9. Procédé de commande selon l'une quelconque des revendications 2 à 8, dans lequel l'étape consistant à utiliser (S16) le MCA en fonction de l'AAP et des paramètres de commande de MCA comprend la configuration du MCA par le biais des paramètres de commande de MCA et la génération, par le biais du MCA configuré et en fonction de l'AAP et de l'accélération simulée du véhicule, desdites données de commande de plateforme de sorte que la plateforme (12) est exploitée de manière à ce que l'accélération simulée du véhicule est appliquée dans l'AAP.

10. Produit programme informatique pouvant être stocké dans des ressources de calcul et conçu de sorte que, lorsqu'elles sont exécutées dans les ressources de calcul, les ressources de calcul sont configurées pour mettre en œuvre un procédé de commande (50) selon l'une quelconque des revendications précédentes.

11. Simulateur de conduite (10) pouvant être actionné par un conducteur (32) et comprenant :
une plateforme (12) ;
une cabine (24) montée sur la plateforme (12) et conçue pour être déplacée par la plateforme (12) ; et
des ressources de calcul (34) couplées de manière opérationnelle à la plateforme (12) et configurées pour :
- acquérir des données d'entrée comprenant au moins des données de conducteur et/ou des données de manœuvre, les données de conducteur indiquant des paramètres physiques du conducteur (32) et les données de manœuvre indiquant une manœuvre à simuler par le simulateur de conduite (10), les données d'entrée comprenant en outre des données de modèle de véhicule comprenant au moins une accélération simulée du véhicule ;
- déterminer, en fonction des données d'entrée, un point d'application d'accélération, AAP, correspondant au point dans l'espace au niveau de la cabine (24), point auquel l'accélération simulée du véhicule doit être appliquée ;
- mettre à jour les paramètres de commande de l'algorithme de repérage de mouvement, MCA, en fonction des données d'entrée ; et
- utiliser, en fonction de l'AAP et des paramètres de commande de MCA, un MCA pour générer des données de commande permettant de commander le simulateur de conduite (10).

12. Simulateur de conduite selon la revendication 11, dans lequel les ressources de calcul comprennent une unité de commande (34) comportant :
- un bloc d'AAP (60) configuré pour déterminer l'AAP ;
- un bloc de paramètres de commande de MCA (62) configuré pour mettre à jour les paramètres de commande de MCA ; et
- un bloc de MCA (64) couplé au bloc d'AAP (60) et au bloc de paramètres de commande de MCA (62) et configuré pour utiliser le MCA afin de générer les données de commande.

13. Simulateur de conduite selon la revendication 11 ou 12, dans lequel la plateforme (12) comprend :
- une base de référence (14) ;
- une base mobile (16), la cabine (24) étant fixée à la base mobile (16) ; et
- des moyens d'accouplement (18) accouplant physiquement entre eux la base de référence (14) et la base mobile (16) et comprenant des actionneurs (20) configurés pour être commandés électriquement sur la base des données de commande de manière à déplacer la base mobile (16) par rapport à la base de référence (14).

14. Simulateur de conduite selon la revendication 13, dans lequel la plateforme (12) comprend en outre des capteurs (22) configurés pour acquérir des données de mesure de plateforme indiquant des informations cinématiques de la plateforme (12), les données de mesure de plateforme étant en outre comprises dans les données d'entrée.

15. Véhicule pouvant être actionné par un conducteur (32) et comprenant des ressources de calcul configurées pour :
- acquérir des données d'entrée comprenant au moins des données de conducteur et/ou des données de manœuvre, les données de conducteur indiquant des paramètres physiques du conducteur (32) et les données de manœuvre indiquant une manœuvre à exécuter par le véhicule, les données d'entrée comprenant en outre des données de modèle de véhicule comprenant au moins une accélération simulée du véhicule ;
- déterminer, en fonction des données d'entrée, un point d'application d'accélération, AAP, correspondant au point dans l'espace au niveau du véhicule, point auquel l'accélération simulée du véhicule doit être appliquée ;
- mettre à jour les paramètres de commande de l'algorithme de repérage de mouvement, MCA, en fonction des données d'entrée ; et
- utiliser, en fonction de l'AAP et des paramètres de commande de MCA, un MCA pour générer des données de commande permettant de commander le véhicule.
